# EUROPEAN PATENT APPLICATION

(11) **EP 4 802 967 A1**
(43) Date of publication of application: **09.09.2026**
(21) Application number: 25162283.3
(22) Date of filing: 07.03.2025
(51) Int. Cl.: A47J 36/32

(54) **COOKING RECIPE ADAPTION**

(71) Applicant: BSH Hausgeräte GmbH, 81739 München (DE)
(72) Inventor: Cheong, Yi Heng, 440031 Singapore (SG); Ooi, Ching Sheng, 573943 Singapore (SG); Tanyildiz, Baris, 573943 Singapore (SG)

(57) **Abstract**

A method (200) for controlling a kitchen appliance (110) for preparing a dish according to a cooking recipe (145) comprises steps of: extracting, from the recipe (145), at least one subassembly (205) for preparing the dish; wherein a subassembly (205) comprises a set of sentences ending with an operation step involving the kitchen appliance (110); determining, from a subassembly (205), settings for the kitchen appliance (110); determining, from the subassembly (205), ingredients (150) added and preparation steps (155) for the ingredients (150); and providing ingredients (150) added and ingredient preparation steps (155) for a user (115); as well as settings for the kitchen appliance (110) for preparing the subassembly (205).

## Description

The present invention concerns a kitchen appliance. More specifically, the present invention concerns adapting a cooking recipe to an available functionality of the kitchen appliance.

A dish may be prepared by following instructions from a cooking recipe. The recipe comprises information on ingredients and how to process them, usually in a step-by-step fashion. Food preparation may be facilitated by using a kitchen appliance like a blender or a mixer. In many households, several kitchen appliances are available and oftentimes a kitchen appliance is able to carry out advanced processes. However, the potential of a present kitchen appliance may not be fully exploited if the recipe was not created with the appliance's capabilities in mind. Many cooking recipes rely only on the most basic kitchen appliances in order to be useful in as many households as possible.

It has been proposed to collect cooking recipes which are adapted to a predetermined kitchen appliance. A collection of such verified and tested recipes may be made available to a user of the kitchen appliance. Unfortunately, there will always be recipes that are not especially adapted to the present kitchen appliance and may therefore be hard to prepare with said appliance.

Existing approaches for automatically converting a recipe to appliance-specific operations and settings have proved to be often inaccurate and using them comes with the risk of spoiling a dish during preparation. Most such approaches do not allow for user-created variations or personalized preferences like dietary restrictions or allergies, leading to poor user experience.

It is therefore an object of the present invention to provide an improved technique for adapting a cooking recipe to a predetermined kitchen appliance. The invention solves this object through the subject matter of the independent claims. Dependent claims describe preferred embodiments.

According to a first aspect of the present invention, a method for controlling a kitchen appliance for preparing a dish according to a cooking recipe comprises steps of: extracting, from the recipe, at least one subassembly for preparing the dish; wherein a subassembly comprises a set of sentences ending with an operation step involving the kitchen appliance; determining, from a subassembly, settings for the kitchen appliance; determining, from the subassembly, ingredients added and preparation steps for the ingredients; and providing ingredients added and ingredient preparation steps for a user; as well as settings for the kitchen appliance for preparing the subassembly.

The recipe may thus be analyzed and restructured for the requirements of preparing the dish with the help of the kitchen appliance. The kitchen appliance may be predetermined based on a user-provided preference. Of course, the method may be carried out with more than one kitchen appliance. Capabilities of the kitchen appliances are assumed to be available for the conversion process. Each subassembly may be treated separately, thus greatly simplifying automatic understanding and conversion. With the recipe divided into subassemblies and each subassembly processed in the described way, all information for preparing the dish is available. A subassembly is structured such that the operation of the kitchen appliance is made possible by a user action, the user action comprising ingredients to add (if any) and preparation or processing steps the user must carry out with the ingredients. The subassembly is one way of defining an efficient cooperation or interaction between a user and the kitchen appliance. The kitchen appliance may be an automatic food processor like the CookIt of Bosch.

Determining a subassembly may comprise scaling an indication of quantity extracted from the recipe if a desired number of servings does not match the number of servings the recipe assumes. Scaling is generally done by deriving a factor that lies between the desired number of servings and the number of servings considered in the original recipe. Then, given amounts for ingredients may be multiplied by said factor.

Herein, a recipe is understood as a written text, possibly accompanied by a picture, that is directed at a person and which comprises information that allows the person to prepare a predetermined dish. Generally, a recipe will not contain strictly all information required for preparing the dish. The person is assumed to have some world-knowledge and ideally some understanding of cooking so that he is able to supply missing parts or resolve contradictions or unclarities on his own. The cooking process may require some adaptations as food ingredients may vary greatly between preparations. For instance, pasta will require a shorter or longer cooking time than specified in the recipe, depending on the pasta itself but also on a ratio of pasta and water, a degree of saltiness of the water and an ambient air pressure (often influenced by a height above sea level). Likewise, a tomato to be added may be big or small.

The operation step may be determined on the basis of an appliance setting mentioned in the recipe. Such a setting may be explicitly mentioned, possibly in a running text or in the format of a table. A setting may for instance comprise one of a temperature, a duration, a weight, a volume, a tool used for mechanical application, a rotation or other operation speed of said tool.

The operation step may be determined on the basis of structured data comprised by the recipe. Structured data may for instance comprise a keyword describing the recipe, a portion size of the recipe, a classification of a type of cooking during the appliance operation step, quantities of the ingredients used, or a classification of the ingredients used. Such information may be extracted from handling instructions, a hint, a given option or any other information directed at the user.

The operation step may be determined on the basis of a keyword in the recipe. Such a keyword my e.g. comprise a type of cuisine, a dietary restriction, a cooking technique, or a special equipment required. One more keywords may be predetermined and the subassembly may be scanned for such keywords. A keyword may relate to other information that may be used to interpret the recipe. For instance, should the recipe concern the Vietnamese kitchen, instructions for cooking rice which are comprised by the recipe may be completed with information how rice is commonly cooked in Vietnam. By paying attention to such details, the operation step may be adapted to the style or culture of the dish. In the given example, a choice may be made between steaming, boiling or frying the rice, to what degree or over what time.

The operation step may be determined on the basis of a type of cooking carried out in the subassembly. Example types of cooking comprise baking, broiling, or slow-cooking. The type of cooking may be mentioned in the recipe or derived from other information, especially the above-mentioned cultural background of the dish.

The operation step may be determined on the basis of a categorization or classification of an ingredient. The ingredient may be added in the subassembly or may be already in a receptacle, in which the operation step is carried out and into which more ingredients may be added. As an example for classification, the type of an ingredient may be vegetable, protein or spice. A state of the ingredient may cover its freshness, if it is frozen or dried, its internal temperature, tenderness, colour, doneness or moisture contents. The ingredient may have a predetermined function, e.g. act as main ingredient, seasoning or garnish. The ingredient may contain components like protein, fat, sugar or vitamins which may be relevant for successful preparation of the dish. Classification or categorization may be done based on an ontology. With a representative hierarchy and composition relationship structure, it is possible to create structured knowledge about these tools.

It is generally preferred that the operation step is determined on the basis of cocking or background knowledge. Such knowledge may comprise kitchen chemistry and help, for instance, to determine in which way and over which time something must be heated to a certain temperature in order to achieve a predetermined cooking effect. Such knowledge may moreover comprise specific information about the used kitchen appliance. For example, a table detailing how the CookIt preferably should process each conceivable ingredient may be used.

The operation step may be determined on the basis of semantic information comprised by the sentences. That is, information from a continuous text may be semantically analyzed in order to set certain properties of the operation step. Secondary information, such as a sense or urgency in the writing or a hint on criticality of a step may be taken into account. In one embodiment, a missing detail or information is inferred from a context or pattern of the recipe. Such an information may for instance comprise a serving (portion) size or a cooking method.

Determination of the operation step may be carried out with the help of a Large Language Model (LLM), especially a Generative Pretrained Transformer (GPT). Example LLMs that could be used for the presented technique include GPT-3 (and later versions like GPT-4 etc.), LLaMA or BLOOM. The LLM is trained on a very large number or texts so that a certain world knowledge has been accumulated. This knowledge comprises at least basic cooking knowledge. Training data may comprise cooking recipes which are available in abundance in various collection sites on the internet. If required, the LLM may be fine tuned on culinary or cooking information such as to perfect its skills for the technique disclosed herein. The LLM can be given the recipe and prompted to determine a subassembly according to the above suggestions.

Method according to one of the above claims, wherein another subassembly from a different recipe is determined; the other subassembly being similar to the present subassembly; and the appliance setting for the present subassembly is determined on the basis of an appliance setting associated to the other subassembly. In this context, a first recipe may be made available to processing with the appliance by referencing a second recipe. The second recipe may be known to work well with the appliance, while the first recipe may lack such information. Information associated with the second recipe may be transferred to the first recipe. E.g., an appliance setting associated with the second recipe may be used for processing the first recipe.

It is suggested that the similarity between the subassembly and the other subassembly should be above a predetermined grade or threshold. Similarity may be determined with a predetermined method on a predetermined scale. It is furthermore preferred that similarity is determined with methods of Artificial Intelligence. In this way, the many aspects, parameters and facets of an object as complex as a subassembly may be matched against corresponding features of another subassembly. This may be done, e.g., by comparing vectors (e.g. embeddings) in latent space.

In one embodiment, similarity between subassemblies is determined on the basis of similarities between ingredients or their proportions between the subassemblies. This may make sure that the recipes are "similar" in an intuitive sense. Processing roughly the same ingredients with roughly the same parameters is likely to produce very similar results. It is furthermore preferred that applicability of operation steps between the subassemblies is allowed for. The gist or character of a recipe or one of its subassemblies may thus be preserved.

For determining a similar recipe or subassembly it is suggested to build a collection with many recipes which may be used for reference. The more recipes there are present in the database, the more likely it is that an unknown recipe has a subassembly that matches a subassembly of a known recipe. The unknown recipe may be processed in the suggested way, thus making possible the use of the appliance. The resulting recipe may be considered tested and may be added into the collection. However, it is preferred to first detect some approval of the user carrying out the preparation. Once a predetermined number or quality of such approval has been reached, the recipe may be added to the collection, thus increasing its size. The size of the collection has the potential of growing exponentially, at least for some time.

The subassemblies may be vectorized with an LLM. Such a vector is generally known as an embedding and may have a large number of dimensions. Similarity may then be determined on the basis of a similarity between the vectors. For comparison of vectors several methods are known which may be used for the presently suggested technique. Example measures for similarity comprise Jaccard distance, string search, embedding-based search from semantic information and beam search. It has been found that good results can be achieved with cosine similarity. Cosine similarity basically is dependent on an angle between the vectors in a multi-dimensional space, which is often referred to as latent space. The smaller the angle is, the higher the similarity is and lengths of the vectors are disregarded. A degree to which two vectors (or embeddings) are considered similar to each other may thus be determined without the influence of an absolute value of a vector element.

Similarity is preferred to be determined between subassemblies. For finding candidates for subassemblies, recipes may be considered which are in themselves similar to the recipe in question. In other words, in order to adapt a first recipe to the appliance, a vector may be determined. From the collection of "known good" recipes one or more second recipe may be retrieved which have associated a vector that compares well to the vector of the first recipe. For each second recipe, vectors corresponding to their subassemblies may be compared to a vector corresponding to a subassembly of the first recipe.

According to yet another embodiment, an ingredient is abstracted from a subassembly before its vectorization. The ingredient may be removed or replaced with a wildcard token in natural language processing. Such a token may be denoted '[MASK]'. In an illustrative example, the statement "Fluff the quinoa with a fork and set aside" may be abstracted to "Fluff the [MASK] with a fork and set aside". It has been found that similarities between vectors are more representative if the ingredients are abstracted.

According to another embodiment of the present invention, a device is proposed, the device comprising: an input interface for obtaining a cooking recipe for preparing a dish; an output interface; and processing means. The processing means are adapted for extracting, from the recipe, at least one subassembly for preparing the dish; wherein a subassembly comprises a set of sentences ending with an operation step involving the cooking appliance; determining, from a subassembly, settings for the kitchen appliance; determining, from the subassembly, ingredients added and preparation steps for the ingredients; and outputting ingredients added and ingredient preparation steps for a user; as well as settings for the kitchen appliance for preparing the subassembly.

The processing means may be adapted to carry out, completely or in part, a method disclosed herein. The processing means may be of electronic nature and may comprise a micro-computer or micro-controller, an ASIC or a similar device. The method may be realized as a computer program product with program code means and may be stored on computer readable media. Features or advantages of the method may be applicable to a corresponding device or system as well as vice versa.

The device may be disposed in a household and may be operated locally. It is however preferred to realize the device outside the household in a remote unit or a backend. The remote unit may be realized as a server computer in some datacenter or as a service in a cloud, where the service is abstracted from the hardware it runs on. The remote unit may more easily be trained or fine-tuned on the basis of information gathered during an above-mentioned determination, during preparation of the dish or through user feedback. By collecting such information from a plurality of users or recipes to be processed, the remote unit may be trained much faster. The quality of its outputs may converge to an optimum more quickly.

In one embodiment of the present invention, the output interface of the device is adapted to connect to the kitchen appliance. The processing means may be adapted to control the kitchen appliance according to a determined operation step. There may be different output interfaces, a human interface for outputting information to a user and a machine interface for connecting to the kitchen appliance. The device may have a user interface for conveying information in both directions. Information entered by the user through the interface may be used for controlling the conversion process. The user may also express his wishes, actions or questions through said interface. For instance, the user may inform the system via the interface that he has chosen to amend the recipe, for instance by swapping one ingredient with another one or by modifying quantities of ingredients. The user may also give feedback on how satisfied he is with the conversion, the resulting recipe or the dish prepared according to the converted recipe.

A system comprises a recipe conversion device disclosed herein and a kitchen appliance. The conversion device and the appliance are communicatively connected. An optional user interface may be comprised by the kitchen appliance or there may be a dedicated user appliance hosting the user interface. This appliance is communicatively connected to the device for converting cooking recipes and/or the kitchen appliance. The conversion device may be disposed locally in an area of the kitchen appliance, or in a remote location.

Non-restricting embodiments of the invention will now be discussed in more detail with reference to the enclosed drawings in which:
- figure 1: shows an exemplary system;
- figure 2: shows a flow diagram of an exemplary method; and
- figure 3: shows another flow diagram of a method.

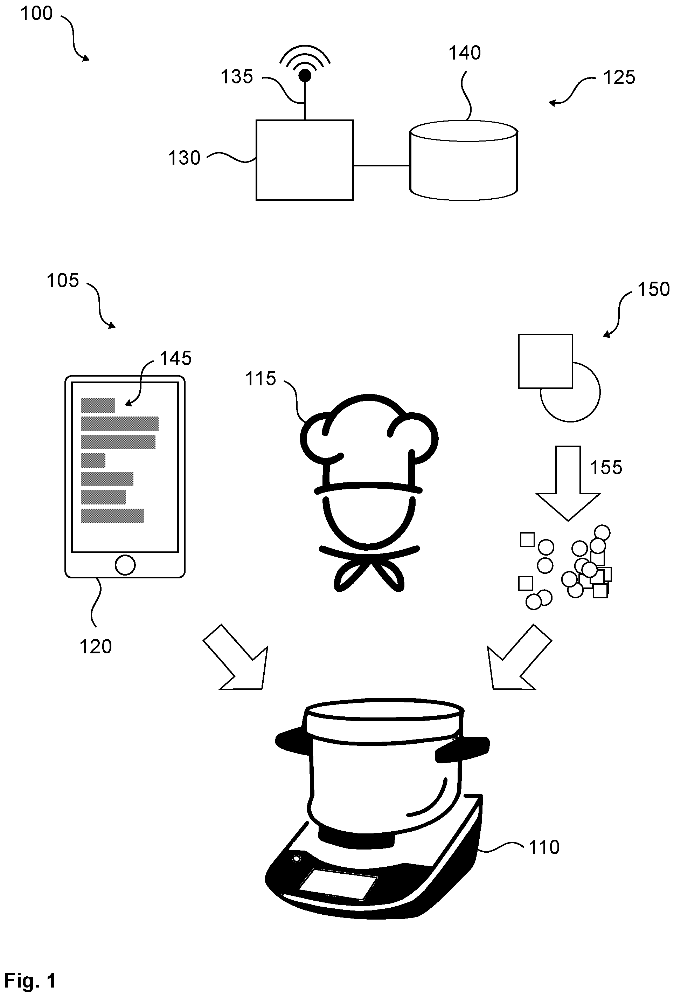

Figure 1 shows a system 100. Although the complete system 100 may be disposed in one place, Figure 1 shows a distributed approach. In a household 105, a kitchen appliance 110 is disposed. The kitchen appliance 110 is adapted to assist a person 115 in the preparation of a dish. A user interface 120 may be comprised by the kitchen appliance 110 or it may be realized as a standalone unit, exemplarily shown as a smartphone in Figure 1. In some embodiments, both options exist in parallel.

The kitchen appliance 110 may comprise a multi-purpose kitchen appliance that is adapted to perform several functions. For instance, a receptacle for ingredients may be heated. A built-in scale may help measuring the correct amount of ingredients. There may be a stirrer or another mechanical processing element that can be used on contents of the receptacle. The stirrer may accept different tools for processing the ingredients. Using the user interface 120, the person 115 may be led through the steps of a recipe, wherein at least some of the steps make use of a function of the appliance 110.

Separate from the household 105, a remote unit 125 is realized, the remote unit 125 being adapted to convert cooking recipes. It is preferred that the remote unit 125 is also adapted to store a collection of cooking recipes that are known to work with the appliance 110. Other cooking recipes may also be hosted at the remote unit 125. The unit 125 comprises processing means 130, a communication interface 135 and an optional data storage 140.

The person 115 may download a cooking recipe 145 for a dish, which he wishes to prepare from an arbitrary source, including the remote unit 125. The recipe 145 is assumed not to be designed for involving the specific kitchen appliance 110 in the described process of food preparation. It is proposed that the unit 125 processes the recipe such as to adapt it to the kitchen appliance 110. For this, the recipe 145 is reorganized into subassemblies. Each subassembly comprises one or more sentences ending with an operation step involving the kitchen appliance 110. The unit 125 will determine settings for the kitchen appliance 110 for the operation step. Furthermore, an indication of one or more ingredients 150 to be added and/or ingredient preparation steps 155 for the person 115 will be provided. Ingredient preparation 155 may for instance comprise measuring the ingredient 150 and cutting or chopping it to fragments of acceptable size.

The ingredient preparation 155 step may be considered an enabler for an operation that is carried out by the kitchen appliance 110. For instance, in the process of preparing a broth, ingredients 150 like onions, celery and carrots must be roughly chopped before they are added into the receptacle. An operation step will then include heating the receptacle with water and said ingredients 150 to a predetermined temperature for a predetermined time. The operation step is preferred to be determined in accordance with functions available through the kitchen appliance 110. The appliance, for instance, might offer heating the receptacle according to a predetermined temperature curve. A curve suitable for the broth may be selected and the vegetables may be added at an appropriate time with respect to the curve.

The basic operation of the kitchen appliance 110 starts with the person 115 selecting a recipe 145. An existing recipe may be retrieved from some online service or the recipe may be sent along from a different user. The person 115 may also decide to create a recipe on his own. If possible, a variant of the recipe may be selected. For example, Chilli may be prepared with meat (con Carne) or without (sin Carne). More than one choice may be made to determine the right variant. Provided that all necessary ingredients 150 are available, the cooking may start. The actual cooking comprises outputting cooking steps to the person 115 and the person 115 implementing the steps with the help of the kitchen appliance 110. A cooking step may comprise instructions on how to handle an ingredient 150 or an intermediate product and also settings for the kitchen appliance 110. The settings may be directly sent to the appliance 110.

The technique proposed herein builds upon the notion of subassemblies for organizing a cooking process. In the following, this concept is explained in some more detail.

The following Table 1 shows steps of an exemplary recipe. The first column denotes a step number and the second column refers to an instruction to the person 115 carrying out the recipe. The following columns describe a tool to be used, a temperature in degrees Celsius to heat the cooking receptacle to, the level (rotation speed) of a stirring device, a duration of the described operation of the kitchen appliance 110 in seconds and finally ingredients that are added in the step.

| **#** | **Instruction** | **Tool** | **T [°C]** | **Level** | **t [s]** | **Ingredients added** |
|---|---|---|---|---|---|---|
| 1 | Rinse 300 g of beef and pat dry with a paper towel | | | | | |
| 2 | Insert the 3D stirrer | | | | | |
| 3 | Remove only the outer skin from 2 onions and halve | | | | | 2 tbsp sunflower oil |
| 4 | Add 2 tablespoons of sunflower oil to the pot and place the onion halves in the pot with the cut surface facing down | | | | | 2 onions, outer shell removed, halved |
| 5 | Close the lid, remove the measuring cup and fry the onions | Stirrer | 160 | 0 | 360 | |
| 6 | Peel 1 carrot and 100 g celeriac and cut into 2 cm pieces together with 100 g leeks | | | | | 1 carrot, peeled, in pieces (2 cm) |
| 7 | Add the chopped vegetables to the pot | | | | | 100 g Celery, peeled, in pieces (2 cm) |
| 8 | Close the lid and fry everything | Stirrer | 160 | 20 | 180 | |
| 9 | Remove the 3D stirrer | | | | | |
| 10 | Weigh 1.5 liters of water in the pot | | | | | 1500ml water |
| 11 | Add the beef to the pot | | | | | 300g beef (breast), whole piece |
| 12 | Add 1 tbsp salt, 2 bay leaves, 1 tsp peppercorns, 5 stalks of parsley and 2 stalks of lovage to the pot | | | | | 1 tbsp salt, 2 bay leaves, 1 tsp black peppercorns, 5 stems fresh smooth parsley, 2 stems fresh lovage |
| 13 | Close the lid, insert the measuring cup and heat the broth | No Tool | 98 | 0 | 540 | |
| 14 | Let the broth simmer | No Tool | 98 | 0 | 480 0 | |
| 15 | Remove the beef, cut into small cubes and spread on preheated plates | | | | | |
| 16 | Pour the broth through a sieve and serve immediately | | | | | |

The given recipe 145 contains both structured and unstructured data. Structured data includes appliance 110 operation instructions such as the appliance tool used, the temperature of the ingredients in the receptacle, the rotation speed of a tool of the appliance 110 and the set duration of the appliance operation step. Unstructured data includes the human-readable instructions, as well as descriptors given to each of the ingredients 150.

Given such a recipe 145, it is proposed to break it down into subassemblies using both the already structured recipe data in addition to constructing additional data from the original natural language recipe. A subassembly of a recipe 145 may be defined as a set of sentences ending with an operation step of a target cooking appliance 110. These sentences may also encompass information about ingredients 150 added to the receptacle of the cooking appliance 110 and the necessary preparation steps for those ingredients. The subassembly, therefore, contains sufficient semantic information within the context of the recipe sentences to define settings for the operation step on the target cooking appliance. This may include but is not limited to time, weight, volume, temperature, rotation speed, and the tool used with the cooking appliance in order to prepare the intended result.

Several assumptions may be used during the creation or determination of subassemblies:
1. Instructions and appliance operation steps corresponding to one subassembly correspond to only one appliance 110. Thus, the contextual information and structured data comprehensively describe the appliance operation.
2. This assumption also ensures the validity of all appliance operation steps as a discrete unit, which preserves the relationship between appliance operation steps to the existing ingredients that are described in the subassembly.
3. If the original recipe 145 has been tested for the specific appliance 110 model, the appliance operation steps can then be qualified as a 'correct appliance operation' for the corresponding set of ingredients.
4. As the focus is on the relation of added ingredients 150 to appliance operation steps, each subassembly should end with an appliance operation step.

Table 2 below shows exemplary subassemblies that can be extracted from the recipe 145 of Table 1:

| **subassembly #** | **first step** | **last step** |
|---|---|---|
| 1 | 1 | 5 |
| 2 | 6 | 8 |
| 3 | 9 | 13 |
| 4 | 14 | 14 |

Data of a subassembly may be further enriched.

For recipes 145 that only exist in the form of natural language in their original form, subassembly data further needs to be enriched with structured data. Structured data includes the settings of the operation step on the cooking appliance 110. It may also include but is not restricted to keywords describing the recipe 145, the serving (portion) size of the recipe 145, the classification of type of cooking during the appliance 110 operation step, the quantities of the ingredients used, and the classification of the ingredients used. In enriching the subassembly data, it is critical to ensure that the settings of the appliance 110 operation step are accurately captured. These settings might include specific parameters such as volume, weight, temperature, time, rotation speed, and the tool used.

Additionally, by tagging keywords that describe the recipe 145, one can enhance searchability and categorization. Keywords might denote the type of cuisine, dietary restrictions, cooking techniques, or special equipment required. The portion size (i.e. serving size) is another essential piece of structured data, as it informs the user about the number of servings the recipe 145 produces, which is crucial for meal planning and scaling recipes 145 up or down.

The classification of the type of cooking during the appliance 110 operation step helps in contextualizing the recipe 145. For instance, distinguishing between baking, broiling, or slow-cooking can allow both users and machines to classify correct techniques and settings. Similarly, specifying the quantities of ingredients ensures correct relation between the cooking steps and their applicability to the ingredients in question.

Furthermore, classifying the ingredients plays a vital role in understanding their roles and interactions within the recipe 145. Ingredients can be categorized based on their type (vegetable, protein, spice), their state (fresh, frozen, dried), and their function within the recipe 145 (main ingredient, seasoning, garnish) as well as their ingredient content (protein, fat) and method of representation (ontology).

If any of this information is not present or insufficiently defined by the original text of the recipe 145, estimations can be generated by a large language model. The model can infer missing details by analyzing the context and patterns within the recipe 145. For example, if the portion size (or serving size) is not mentioned, the model might estimate it based on the quantities of the ingredients listed. Similarly, if the cooking method is not explicitly stated, the model can deduce it from the semantic information contained in the original text of the recipe 145, described appliance 110 settings and the type of dish being prepared. Such information may also be referenced with a knowledge graph after the structured data is obtained.

Subassemblies allow transferring associated information from one to a similar one. This can be used to enrich a subassembly with information that cannot be derived from the underlying recipe 145. Information that is associated to a known subassembly, e.g., by a process comprising human interaction, may be made available to an unprocessed or "new" subprocess. Such information may especially include user experiences from actually carrying out a recipe 145 on the basis of its derived subassemblies, maybe a reviewing process, a community-based rating or an expert's assessment.

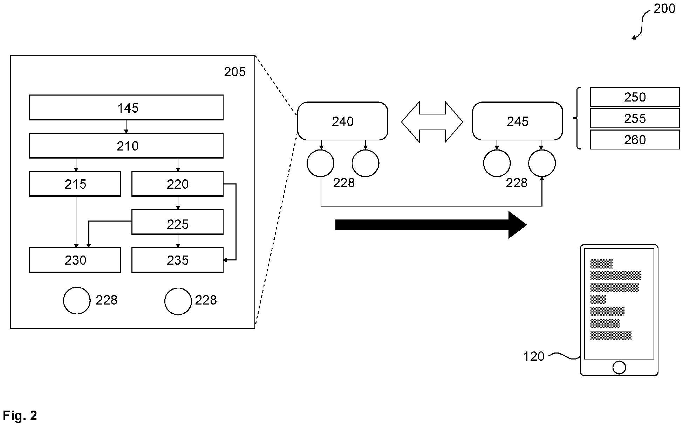

Figure 2 shows a flow diagram of an exemplary method 200. A subassembly 205 is generally constructed on the basis of a recipe 145. Cooking steps of the recipe 145 are chunked in a step 210 according to a kitchen appliance 110 operation step. Chunking may start with determining an operation step for the appliance 110 and then including all prerequisites for the operation into the same subassembly. Naturally, the outcome from one subassembly 205 may serve as input for another subassembly 205.

In a step 215, structured recipe data may be determined and the subassembly 205 may be enriched with such data. Similarly, unstructured recipe data may be determined in a step 220 in order to further enrich the subassembly 205. Data extraction may be carried out with an LLM 225. The output of the LLM 225 and of the structuring step 215 may be integrated in appliance 110 operation instructions 228 in a step 230. From the unstructured data, semantic information may be derived in a step 235. The semantic information may later be output to the person 115. Such information may especially comprise ingredients 150 to be added and manual operations to be carried out by said person 110 in order to support the cooking process.

Subassemblies 205 can further be divided into two types: known subassemblies 240 derived from recipes 145 that have been tested and are known to work on the target cooking appliance 110, and new subassemblies 245 from untested recipes 145.

Tested recipes 145 may include those that have been specifically tailored to the target appliance 110 to ensure accuracy and successful outcomes. These recipes 145 provide confidence in their results because the data associated with each subassembly 205 is complete and verified. This data includes precise parameters such as temperature, time, weight, rotation speed, and the tool used during each appliance operation step, ensuring that every aspect of the cooking process is well-defined and reliable.

Untested recipes 145 have not been explicitly evaluated with the target appliance 110. Untested recipes 145 may include versions of tested recipes 145 that have undergone modifications, such as changes in serving sizes, nutritional content, ingredient substitutions, or taste adjustments. They might also encompass entirely new recipes 145 written in natural language that lack testing on the specific appliance 110. As these recipes have not been validated, the structured data for their subassemblies 205 may not be perfectly accurate and might contain estimations.

Combining this understanding of subassemblies 205 from tested and untested recipes 145, and the above-mentioned assumptions, it is proposed to transfer information from a known subassembly 240 from a tested recipe 145 to a new subassembly 245 from an untested recipe 145. If the known subassembly 240 is sufficiently similar to the known subassembly 245, both subassemblies 240, 245 can be assumed to follow the same rules in the areas of (1) Ingredient and their proportions and (2) the applicability of device operation steps applied to the ingredients 145 for the particular appliance 110. This means that a 'correct device operation' from the known subassembly 240 can be transferred to the new subassembly 245 with a high degree of certainty that the resulting ingredient and device operation combination on the untested recipe 145 will result in the outcome as stated in the original untested recipe 145.

On a larger scale, if a sufficiently large database of subassemblies 205 from tested recipes 145 can be constructed, just about any untested recipe 145 may be converted to perform well on a given appliance 110.

This process is shown in a right hand portion of Figure 2. The new subassembly 245 may come from a variation 250 from a known and tested recipe 145, from a scaling 255, i.e. a variation in serving size or number or from an entirely new recipe 260.

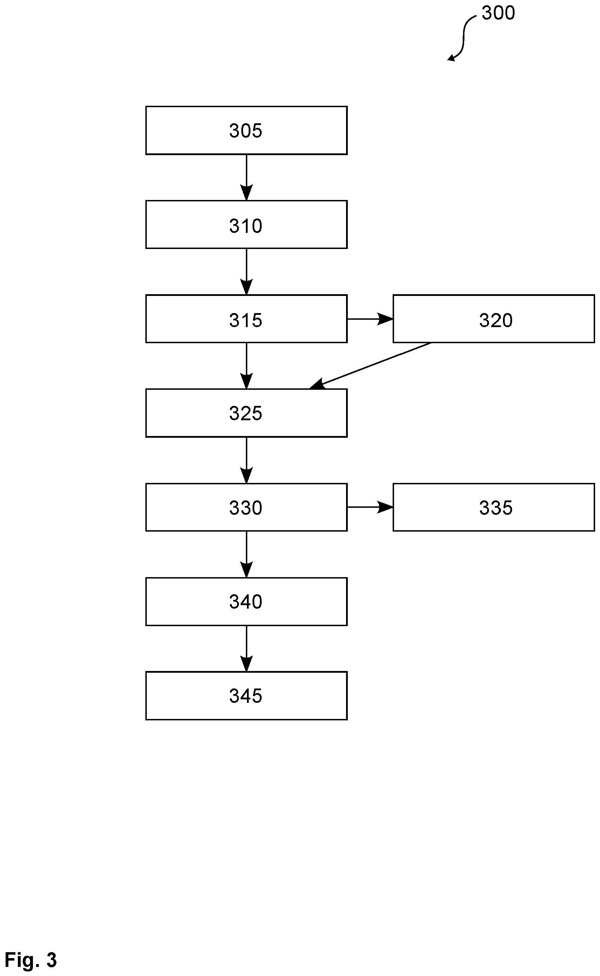

Figure 3 shows another flow diagram of an exemplary method 300. The process starts in a step 305. First, the unknown recipe 145 is acquired and recipe data is extracted. In a step 310 data acquisition is performed and in a step 315 extracted data may be processed (cf. determination of subassemblies 205 as discussed herein, especially with respect to Figure 2). Optionally, a search for ingredient combination substitution may be carried out in a step 320.

In a step 325, a previously determined new subassembly 245 may be further investigated. In order to facilitate finding a sufficiently similar known subassembly 240, it is proposed to create a vector on the basis of the new subassembly 245. Said vector is preferred to be an embedding and the embedding may be determined by applying a technique known from artificial intelligence, especially by using an LLM or a GPT. It is furthermore preferred that before determining the vector, ingredients 145 are abstracted. This can be done by identifying information indicative of an ingredient 145 in the new subassembly 245 and replacing it with a wildcard that will be ignored in subsequent vector determination. In some processing systems, such a wildcard comprises the [MASK] token.

In a step 330 the vector is compared to vectors of known subassemblies 240 in the previously created collection or database (cf. remote unit 125 in Figure 1). Comparison may involve a method of comparing vectors such as determining cosine similarity. Comparison may yield a parameter that is indicative of how similar two vectors are. Should similarity be higher than a predetermined threshold, a match is found. Possibly, several matches are determined. The following process (cf. step 340) may be carried out with regard to the best match with the highest determined similarity or with regard to several matches and the results may be integrated.

If it is determined (in a step 330) that no sufficiently similar known subassembly 240 could be found, a corresponding message may be output in a step 335. Optionally, user input may be accepted for amending the subassembly 205 in question.

In a step 340, information from the known subassembly 240 may be transferred to the new subassembly 245. Especially, settings for the kitchen appliance 110 as defined in the known subassembly 240 may be adapted for or copied to the new subassembly 245. The new subassembly 245 may be updated accordingly.

The given procedure may be carried out for each of the new subassemblies 245 of the recipe 145 in question. The resulting recipe 145, comprising a set of subassemblies 245, may then be delivered to the user 115.

The recipe 145, along with the set of adapted subassemblies 205, may be stored in a database 125 (in a step 345). In case the same recipe 145 gets processed again, possibly with regard to a different known subassembly 240, the resulting amended new subassemblies 245 may be compared against each other. A set of new subassemblies 245 may undergo some testing or reviewing process which may involve rating and/or amending the recipe 145. Once this process is passed, the new subassemblies 245 may be considered known subassemblies 240 and the recipe 145 may be considered known and tested.

The following Table 3 shows steps of two exemplary recipes A and B. The first column denotes a step number, the second column refers to instructions for Recipe A and the third column to instructions for Recipe B. The last line of Table 3 lists required ingredients for both recipes.

| **#** | **Recipe A** | **Recipe B** |
|---|---|---|
| 1 | In a medium saucepan, bring the vegetable broth or water to a boil. Add the quinoa, reduce heat to low, cover, and simmer for 15 minutes until the liquid is absorbed. Fluff the quinoa with a fork and set aside. | In a medium saucepan, bring the chicken or vegetable broth to a boil. Add the rice, reduce heat to low, cover, and simmer for 15-20 minutes until the liquid is absorbed. Fluff the rice with a fork and set aside. |
| 2 | Preheat the oven to 375°F (190°C). Heat olive oil in a large skillet over medium heat. Add diced onion and sauté for about 3 minutes until softened. Add the minced garlic and cook for another minute. Stir in the chopped spinach and cook until wilted, about 2-3 minutes. Add the drained diced tomatoes, chickpeas, cooked quinoa, cumin, smoked paprika, salt, and pepper. Mix everything together and cook for another 2 minutes. Remove from heat, and stir in the crumbled feta cheese and chopped parsley. | Heat olive oil in a large skillet over medium heat. Add the diced onion and sauté for about 3 minutes. Add the minced garlic and cook for another minute. Stir in the mushrooms and cook for 5 minutes until they release their moisture and become tender. Add the drained fire-roasted diced tomatoes, corn, cooked rice, oregano, Italian seasoning, salt, and pepper. Mix everything together and cook for 2 more minutes. Remove from heat, and stir in 1/2 cup of the shredded mozzarella and the chopped basil. |
| 3 | Lightly grease a baking dish with olive oil. Fill each bell pepper with the quinoa mixture, pressing the filling down to make sure the peppers are packed full. Place the stuffed peppers upright in the prepared baking dish. | Lightly grease a baking dish with olive oil. Fill each bell pepper with the rice mixture, pressing the filling down to make sure the peppers are packed full. Place the stuffed peppers upright in the prepared baking dish. |
| 4 | In a small saucepan, heat the olive oil over medium heat. Add the tomato sauce, dried oregano, red pepper flakes (if using), and fresh basil. Simmer for 5-7 minutes to allow the flavors to meld. Pour the sauce around and over the stuffed peppers in the baking dish. | In a small saucepan, heat the olive oil over medium heat. Add the tomato sauce, dried oregano, and fresh basil. Simmer for 5-7 minutes to allow the flavors to meld. Pour the sauce around and over the stuffed peppers in the baking dish. |
| 5 | Cover the dish with foil and bake in the preheated oven for 30 minutes. Remove the foil and bake for an additional 15-20 minutes, until the peppers are tender and slightly browned on top. | Cover the dish with foil and bake in the preheated oven for 30 minutes. Remove the foil and bake for an additional 15-20 minutes, until the peppers are tender and slightly browned on top. |
| 6 | Let the stuffed peppers cool for a few minutes before serving. Spoon some of the tomato sauce from the baking dish over the top, and garnish with extra parsley or feta, if desired. | Let the stuffed peppers cool for a few minutes before serving. Spoon some of the tomato sauce and the remaining mozzarella from the baking dish over the top, and garnish with extra parsley or feta, if desired. |
| | 4 large bell peppers | 4 large bell peppers |
| | 1 cup quinoa | 1 cup long-grain rice (or brown rice) |
| | 2 cups vegetable broth or water | 2 cups chicken broth or vegetable |
| | 1 tbsp olive oil | broth |
| | 1 small onion, finely diced | 1 tbsp olive oil |
| | 3 cloves garlic, minced | 1 small onion, finely diced |
| | 2 cups fresh spinach, chopped | 3 cloves garlic, minced |
| | 1 can (14.5 oz) diced tomatoes, drained | 2 cups mushrooms, finely chopped |
| | 1 cup canned chickpeas, drained and | 1 can (14.5 oz) fire-roasted diced tomatoes, drained |
| | rinsed | 1/2 cup corn (fresh or canned) |
| | 1 tsp cumin | 1 tsp dried oregano |
| | 1 tsp smoked paprika | 1 tsp Italian seasoning |
| | Salt and pepper to taste | Salt and pepper to taste |
| | 1/2 cup crumbled feta cheese | 1 cup shredded mozzarella cheese |
| | 1/4 cup fresh parsley, chopped | 1/4 cup fresh basil, chopped |

Table 4 below shows determined similarities for vectors corresponding to operation steps of the above exemplary recipe 145. The vectors were created as embeddings by using an LLM. A first column refers to a step number of Table 3, followed by columns for a brief description of the section, a similarity for the determined steps as-is and a column for similarities for vectors that were generated after ingredients were masked so that they do not influence the determined vector.

| **#** | **Section** | **Ingredients Unmasked** | **Ingredients Masked** |
|---|---|---|---|
| 1 | Prepare grain | 0.9767 | 0.9910 |
| 2 | Prepare filling | 0.9718 | 0.9782 |
| 3 | Stuff peppers | 0.9922 | 1.0000 |
| 4 | Prepare sauce | 0.9968 | 0.9968 |
| 5 | Bake peppers | 1.0000 | 1.0000 |
| 6 | Serve | 0.9931 | 0.9931 |

With the implementation of the presently proposed Recipe Modification System, the following use cases and outcomes may potentially be achieved:
Generation of Reliable Cooking Instructions: By breaking down recipes into subassemblies corresponding to cooking appliance operation steps, the system ensures that the operational details such as time, temperature, rotation speed, and tools are reliably defined for users. This leads to more precise and user-friendly instructions, minimizing errors during the cooking process.

Enhanced Recipe Adaptation: Subassemblies from tested recipes will provide a robust knowledge base to inform the adaptation of untested recipes. Using similarity measures like string search, semantic search, and deterministic measures, the system can predict and suggest accurate ingredient quantities and appliance settings for new recipes, even if they have not been tested on the appliance before. This improves the versatility of the appliance by widening the range of recipes it can handle confidently. This method can also verify whether substitutions, such as ingredient and step modifications deviate sufficiently from tested recipes to necessitate a change to the settings.

Efficient Recipe Testing Reduction: Through scalable and reliable predictions, the system reduces the need for continual testing of every new recipe on the appliance. This significantly cuts down on resource expenditure related to recipe testing and speeds up the development and deployment of new recipes for users.

Increased User Trust and Satisfaction: The structured data enrichment process, informed by tested recipes, provides users with dependable cooking steps and ingredient details, thereby increasing trust and satisfaction with the appliance. Users can confidently experiment with new recipes knowing that operational steps have been meticulously predicted.

Targeted Recipe Customization: The system can cater to various dietary needs and preferences by modifying recipes based on portion sizes, nutritional content, and ingredient substitutions. Whether users have specific dietary restrictions or simply prefer certain flavors, recipes can be customized accurately and efficiently.

Knowledge Propagation and Consistency: The system's approach of using tested recipe subassemblies to inform untested ones ensures a consistency and continuity in recipe quality. This propagation of knowledge maintains high standards across all adapted recipes, ensuring that all variants of a recipe are reliable and effective.

Resource base for future function development: The system's approach of formulating tested recipe subassemblies allows these groupings to form coherent groups to build new features on. For example, they may be used as a knowledge base within a larger pipeline incorporating large language models for more reliable recipe generation. They may also be used as a vocabulary of appliances processes so that discretized steps may be organized between different appliances by a system incorporating an agent that result in workflows that have a high chance of success.

Future-proof Development of Recipes: By continuously updating the knowledge base with new tested recipes and refining similarity measures, the system ensures that it remains relevant and effective in the long term. It allows the appliance to evolve with users' needs and cooking trends without necessitating exhaustive manual updates. In the example shown, a tokenization / embedding method is used, but the implementation of the method is dependent on the similarity method chosen. Hence, storage in a uniform structure can be considered general until a specific best implementation is found through further testing.

Overall, the approach of creating and utilizing subassemblies from recipes may enhance the adaptability, reliability, and user satisfaction associated with cooking appliances. This may result in a more efficient development process for recipes, reducing overhead for continuous testing while delivering highly customized and reliable user experiences.

### Reference list (as part of the description)

- 100: system
- 105: household, kitchen
- 110: appliance
- 115: person
- 120: user interface
- 125: remote unit
- 130: processing means
- 135: interface
- 140: data storage
- 145: cooking recipe
- 150: ingredient
- 155: preparation step

- 200: method
- 205: subassembly
- 210: chunking
- 215: extract structured data
- 220: extract unstructured data
- 225: LLM
- 228: operation instructions
- 230: appliance operation instructions
- 235: semantic information
- 240: known subassembly
- 245: new subassembly
- 250: recipe variant
- 255: scaled recipe
- 260: new recipe

- 300: method
- 305: start
- 310: data acquisition
- 315: data processing
- 320: ingredient combination substitution
- 325: similarity search
- 330: compare vector
- 335: output message
- 340: transfer information
- 345: store recipe

## Claims

1. Method (200) for controlling a kitchen appliance (110) for preparing a dish according to a cooking recipe (145), the method (200) comprising steps of:
- extracting, from the recipe (145), at least one subassembly (205) for preparing the dish;
- wherein a subassembly (205) comprises a set of sentences ending with an operation step involving the kitchen appliance (110);
- determining, from a subassembly (205), settings for the kitchen appliance (110);
- determining, from the subassembly (205), ingredients (150) added and preparation steps (155) for the ingredients (150);
- providing ingredients (150) added and ingredient preparation steps (155) for a user (115); and settings for the kitchen appliance (110) for preparing the subassembly (205).

2. Method (200) according to claim 1, wherein the operation step is determined on the basis of an appliance (110) setting mentioned in the recipe (145).

3. Method (200) according to claim 1 or 2, wherein the operation step is determined on the basis of structured data comprised by the recipe (145).

4. Method (200) according to one of the above claims, wherein the operation step is determined on the basis of a predetermined keyword in the recipe (145).

5. Method (200) according to one of the above claims, wherein the operation step is determined on the basis of a type of cooking carried out in the subassembly (205).

6. Method (200) according to one of the above claims, wherein the operation step is determined on the basis of a categorization of an ingredient (150).

7. Method (200) according to one of the above claims, wherein the operation step is determined on the basis of semantic information comprised by the sentences.

8. Method (200) according to claim 7, wherein a missing detail or information is inferred from a context or pattern of the recipe (145).

9. Method (200) according to one of the above claims, wherein another subassembly (205) from a different recipe (145) is determined; the other subassembly (205) being similar to the present subassembly (205); and the appliance (110) setting for the present subassembly (205) is determined on the basis of an appliance (110) setting associated to the other subassembly (205).

10. Method (200) according to claim 9, wherein similarity is determined on the basis of similarities between ingredients (150) or their proportions between the subassemblies (205).

11. Method (200) according to claim 9 or 10, wherein similarity is determined on the basis of applicability of operation steps between the subassemblies (205).

12. Method (200) according to one of claims 9 through 11, wherein the subassemblies (205) are vectorized with an LLM and similarity is determined on the basis of a similarity between the vectors.

13. Method (200) according to claim 12, wherein an ingredient (150) is abstracted from a subassembly (205) before its vectorization.

14. Device, comprising:
- an input interface for obtaining a cooking recipe (145) for preparing a dish;
- an output interface; and
- processing means for
- extracting, from the recipe (145), at least one subassembly (205) for preparing the dish;
- wherein a subassembly (205) comprises a set of sentences ending with an operation step involving the cooking appliance (110);
- determining, from a subassembly (205), settings for the kitchen appliance (110);
- determining, from the subassembly (205), ingredients (150) added and preparation steps (155) for the ingredients (150); and
- outputting ingredients (150) added and ingredient preparation steps (155) for a user (115); and settings for the kitchen appliance (110) for preparing the subassembly (205).

15. Device according to claim 14, wherein the output interface is adapted to connect to the kitchen appliance (110); and the processing means are adapted to control the kitchen appliance (110).

## Amended claims

### Amended claims in accordance with Rule 137(2) EPC.

1. Computer-implemented method (200) for controlling a kitchen appliance (110) for preparing a dish according to a cooking recipe (145), the method (200) comprising steps of:
- extracting, from the recipe (145), at least one subassembly (205) for preparing the dish;
- wherein a subassembly (205) comprises a set of sentences ending with an operation step involving the kitchen appliance (110);
- determining, from a subassembly (205), settings for the kitchen appliance (110);
- determining, from the subassembly (205), ingredients (150) added and preparation steps (155) for the ingredients (150);
- providing ingredients (150) added and ingredient preparation steps (155) for a user (115); and settings for the kitchen appliance (110) for preparing the subassembly (205);
**characterized by** the steps of
- determining a vector for the subassembly with an LLM;
- determining another subassembly (205) from a different recipe (145) using the vector, wherein a similarity between the subassembly (205) and the other subassembly (205) is above a predetermined threshold; and
- determining the settings for the kitchen appliance (110) for preparing the subassembly (205) on the basis of an appliance (110) setting associated to the other subassembly (205).

2. Method (200) according to claim 1, wherein the operation step is determined on the basis of an appliance (110) setting mentioned in the recipe (145).

3. Method (200) according to claim 1 or 2, wherein the operation step is determined on the basis of structured data comprised by the recipe (145).

4. Method (200) according to one of the above claims, wherein the operation step is determined on the basis of a predetermined keyword in the recipe (145).

5. Method (200) according to one of the above claims, wherein the operation step is determined on the basis of a type of cooking carried out in the subassembly (205).

6. Method (200) according to one of the above claims, wherein the operation step is determined on the basis of a categorization of an ingredient (150).

7. Method (200) according to one of the above claims, wherein the operation step is determined on the basis of semantic information comprised by the sentences.

8. Method (200) according to claim 7, wherein a missing detail or information is inferred from a context or pattern of the recipe (145).

9. Method (200) according to one of the above claims, wherein the similarity is determined on the basis of similarities between ingredients (150) or their proportions between the subassemblies (205).

10. Method (200) according to one of the above claims, wherein the similarity is determined on the basis of applicability of operation steps between the subassemblies (205).

11. Method (200) according to one of the above claims, wherein the subassemblies (205) are vectorized with an LLM and similarity is determined on the basis of a similarity between the vectors.

12. Method (200) according to claim 11, wherein an ingredient (150) is abstracted from a subassembly (205) before its vectorization.

13. Device, comprising:
- an input interface for obtaining a cooking recipe (145) for preparing a dish;
- an output interface; and
- processing means for
- extracting, from the recipe (145), at least one subassembly (205) for preparing the dish;
- wherein a subassembly (205) comprises a set of sentences ending with an operation step involving the cooking appliance (110);
- determining, from a subassembly (205), settings for the kitchen appliance (110);
- determining, from the subassembly (205), ingredients (150) added and preparation steps (155) for the ingredients (150); and
- outputting ingredients (150) added and ingredient preparation steps (155) for a user (115); and settings for the kitchen appliance (110) for preparing the subassembly (205);
**characterized in that** the processing means if further adapted for
- determining a vector for the subassembly with an LLM;
- determining another subassembly (205) from a different recipe (145) using the vector, wherein a similarity between the subassembly (205) and the other subassembly (205) is above a predetermined threshold; and
- determining the settings for the kitchen appliance (110) for preparing the subassembly (205) on the basis of an appliance (110) setting associated to the other subassembly (205).

14. Device according to claim 13, wherein the output interface is adapted to connect to the kitchen appliance (110); and the processing means are adapted to control the kitchen appliance (110).
